Europäisches Patentamt

European Patent Office

Office européen des brevets

(19)

(11) Veröffentlichungsnummer : **0 200 178**
**B1**

(12)                    EUROPÄISCHE PATENTSCHRIFT

(45) Veröffentlichungstag der Patentschrift :
17.08.88

(21) Anmeldenummer : 86105778.4

(22) Anmeldetag : 25.04.86

(51) Int. Cl.⁴ : **F 02 C   7/32**

(54) **Hilfsantriebsanordnung mit Getriebe für ein Gasturbinentriebwerk.**

(30) Priorität : 02.05.85 DE 3515770

(43) Veröffentlichungstag der Anmeldung :
05.11.86 Patentblatt 86/45

(45) Bekanntmachung des Hinweises auf die Patenterteilung : 17.08.88 Patentblatt 88/33

(84) Benannte Vertragsstaaten :
DE FR GB IT

(56) Entgegenhaltungen :
EP-A- 0 025 526
DE-A- 1 476 454
DE-A- 1 928 235
DE-A- 2 519 152
DE-A- 2 906 614
US-A- 2 949 731
US-A- 3 514 945

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Weber, Thomas, Dipl.-Ing.
Am Urseler Weg 6
D-6370 Oberursel 4 (DE)
Erfinder : Brockmann, Heinz
Holzweg 25
D-6380 Bad Homburg 6 (DE)

EP 0 200 178 B1

## Beschreibung

Die vorliegende Erfindung bezieht sich auf eine Hilfsantriebsanordnung mit Getriebe für ein Gasturbinentriebwerk, bei der eine Hilfsgasturbine komprimierte Verdichterluft zum Antrieb des Getriebes durch eine über einen Freilauf gekoppelte Luftturbine liefert, wobei das Getriebe Hilfseinrichtungen für das Gasturbinentriebwerk und/oder ein Flugzeug, wie einen mit einer Generatorwelle versehenen Generator und eine Hydraulikpumpe, antreibt, und bei der das Getriebe über eine schaltbare Kupplung mit einem Abtrieb für einen Rotor des Gasturbinentriebwerks versehen ist.

Gasturbinentriebwerke sind häufig als Strahltriebwerke in Flugzeuge eingebaut. Um das Flugzeug unabhängig von einer auf dem Boden stationierten Energieversorgung zu machen, ist es üblich, zum Starten des Gasturbinentriebwerks einen Hilfsantrieb in das Flugzeug einzubauen. Dieser Hilfsantrieb ist zumeist eine entsprechend klein dimensionierte Gasturbine, die ihre Energie während des Startvorganges auf das Gasturbinentriebwerk überträgt. Häufig wird mit dem Hilfsantrieb auch die gesamte Energieversorgung für das Flugzeug und das Gasturbinentriebwerk während des Bereitschaftsbetriebs des Flugzeugs am Boden und/oder während des Prüfvorganges bzw. der Checkphase des Flugzeugs vor dem eigentlichen Start sichergestellt.

Eine gattungsgemäße Hilfsantriebsanordnung ist aus der DE-PS 25 19 152 bekannt. In einem Flugzeug ist ein Gasturbinentriebwerk und eine aus einem Verdichter, einer Brennkammer sowie einer Turbine bestehende Hilfsgasturbine zum Anlassen des Gasturbinentriebwerks eingebaut. Die Hilfsgasturbine treibt über einen Freilauf einen ersten Getriebeteil eines Getriebes an, das wiederum die Antriebsenergie auf Hilfseinrichtungen für das Gasturbinentriebwerk und das Flugzeug, z. B. einen Generator und eine Hydraulikpumpe, verteilt. Ferner liefert der Verdichter der Hilfsgasturbine komprimierte Luft für eine Luftturbine, welche über einen weiteren Freilauf mit einem zweiten Getriebeteil des Getriebes verbunden ist. Dieser zweite Getriebeteil steht über eine ein- und ausrückbare Kupplung mit dem Rotor des Gasturbinentriebwerks und über einen dritten Freilauf mit dem ersten Getriebeteil in Verbindung.

Während des Checkvorganges des Flugzeugs vor dem Start wird nur das erste Getriebeteil über den Freilauf direkt mechanisch angetrieben, wodurch die Hilfseinrichtungen die für den Checkvorgang notwendigen verschiedenen Hilfsenergieformen bereitstellen können. Zum Starten des Gasturbinentriebwerkes wird über ein Ventil komprimierte Verdichterluft auf die Luftturbine geleitet, die über den Freilauf das zweite Getriebeteil und damit bei eingerückter Kupplung das Gasturbinentriebwerk antreibt. Hat das Gasturbinentriebwerk seinen Betrieb aufgenommen, treibt dieses über das zweite Getriebeteil und den zwischen dem ersten und zweiten Getriebeteil angeordneten Freilauf, das erste Getriebeteil und damit die Hilfseinrichtungen an. Durch den ersten und zweiten Freilauf zwischen der Hilfsgasturbine und dem ersten Getriebeteil sowie der Luftturbine und dem zweiten Getriebeteil wird die Hilfsgasturbine von beiden Getriebeteilen abgekoppelt und kann somit nach Beendigung des Startvorgangs des Gasturbinentriebwerks abgeschaltet werden.

Als nachteilig hat es sich bei diesem Hilfsantriebssystem herausgestellt, daß stets alle Hilfseinrichtungen mit allen Getriebezahnrädern angetrieben werden. Falls nicht sämtliche Hilfseinrichtungen benötigt werden, entstehen somit entsprechend hohe Leistungsverluste im Getriebe. Zudem werden mindestens drei Freiläufe benötigt sowie ein zusätzliches Verteilergetriebe ; beides vergrößert den Bauaufwand.

Bei einer gattungsgemäßen Hilfsantriebsanordnung wird erfindungsgemäß die Antriebsenergie der Hilfsgasturbine vollständig und ausschließlich in Form von komprimierter Luft auf eine Luftturbine übertragen, welche wiederum über einen Freilauf das mit dem Gasturbinentriebwerk verbundene Getriebe antreibt. Im Getriebe sind — in Energieübertragungsrichtung von der Luftturbine zum Gasturbinentriebwerk betrachtet — drei Antriebsstränge vorhanden, wobei der Freilauf stets von der Luftturbine angetrieben wird.

Im ersten Antriebsstrang des Getriebes ist der Freilauf mit der Generatorwelle des Generators zu deren ständigem Antrieb verbunden. Im zweiten Antriebsstrang wird der Freilauf über eine schaltbare Kupplung mit weiteren anzutreibenden Hilfseinrichtungen des Gasturbinentriebwerks bzw. des Flugzeugs, z. B. einer Hydraulikpumpe, gekoppelt. Im dritten Antriebsstrang wird über eine weitere schaltbare Kupplung eine drehstarre Verbindung letztendlich vom Freilauf bis zum Rotor des Gasturbinentriebwerks hergestellt. Für den ersten Antriebsstrang sind beide schaltbaren Kupplungen ausgerückt und die Hilfsgasturbine treibt über den Freilauf nur die Generatorwelle an. Auf diese Weise versorgt die Hilfsgasturbine das Flugzeug mit elektrischer Energie, ohne daß irgendwelche weiteren Hilfseinrichtungen angetrieben werden müssen. Die Checkphase des Flugzeugs kann problemlos ablaufen. Als nächstes wird zur Aktivierung des zweiten Antriebsstranges die entsprechende Kupplung eingerückt, wodurch alle weiteren angeschlossenen Hilfseinrichtungen antreibbar sind. Es lassen sich jetzt die restlichen Vorbereitungen bis zum eigentlichen Start des Gasturbinentriebwerkes bzw. des Flugzeuges durchführen. Auch ist jeder gewünschte Bereitschaftsbetrieb des Flugzeugs am Boden durchführbar. Zum Antrieb des Rotors des Gasturbinentriebwerks — dritter Antriebsstrang — wird die gasturbinenseitige Kupplung ebenfalls eingerückt, wodurch der Start des Gasturbinentriebwerks erfolgen kann. Beginnt danach das Gasturbinentriebwerk ordnungsgemäß zu laufen, so kehrt sich der Energiefluß um und das Getriebe mit dem Generator sowie den weiteren Hilfseinrichtungen wird von dem Gasturbinentriebwerk angetrieben. Die Luftturbine ist durch die Überholkupplung ab diesem Zeitpunkt vom eigentlichen Getriebe abgekoppelt und kann infolgedessen abgeschaltet werden.

In vorteilhafter Weise wird in jeder Betriebsart nur genau die Hilfseinrichtung angetrieben, die tatsächlich benötigt wird. Die Größe der anfallenden Leistungsverluste ist so auf ein Minimum reduziert. Die erfindungsgemäße Hilfsantriebsanordnung nutzt den zur Verfügung gestellten Treibstoff in optimaler Weise aus und ist daher besonders für den Bereitschaftsbetrieb am Boden, für die Checkphase der Flugzeughilfseinrichtungen sowie aller Flugzeugeinbaukomponenten und für den eigentlichen Gasturbinentriebwerksstart eine kostengünstige Betriebsvariante. Wird das Getriebes zusammen mit den Hilfseinrichtungen während des Fluges des Flugzeugs von dem Gasturbinentriebwerk angetrieben, werden auch in diesem Betriebsfall nur die Getriebeteile angetrieben, die gerade benötigt werden. Die erfindungsgemäße Hilfsantriebsanordnung ist somit in dieser Betriebsart eine optimale Lösung hinsichtlich der Primärenergieausnutzung des Gasturbinentriebwerks. Zudem stellt die Leistungsübertragung von der Hilfsgasturbine zum Getriebe nur durch komprimierte Verdichterzapfluft eine konstruktiv einfache und daher im Bauaufwand niedrige sowie gewichtsgünstige Variante einer Hilfsantriebsanordnung dar. Auch der Bauaufwand für das erfindungsgemäße Getriebe ist vorteilhaft klein, da lediglich ein einziger Freilauf zusammen mit zwei schaltbaren Kupplungen zur Erzielung der erfindungsgemäßen Vorteile benötigt wird.

Als schaltbare Kupplungen können alle ein- und ausrückbaren Kupplungen dienen, wie z. B. mechanisch betätigte Reibkupplungen, elektromagnetische Kupplungen oder Zahnkupplungen mit und ohne Synchronisierung. Die Anzahl der benötigten Getriebezahnräder soll zur Verlustminimierung so gering wie möglich gehalten werden. Das für den geforderten Antriebszweck gewünschte Übersetzungsverhältnis wird mit einer möglichst geringen Zahl an Zahnradpaarungen sichergestellt.

In einer Ausgestaltung der Erfindung ist es vorgesehen, die Kupplungen als schaltbare Zahnkupplungen auszubilden. Zum Ein- und Ausrücken der Kupplungen sollte dann während des Schaltvorganges die Luftzufuhr für die Luftturbine abgesperrt werden, so daß die Zahnräder der Zahnkupplungen sicher und problemlos einrasten können. Dieser Vorgang kann zweckmäßig durch den Einbau einer Synchronisierung, z. B. mit Synchronringen, erheblich erleichtert werden. Zahnkupplungen sind besonders problemlos in das Getriebe zu integrieren und benötigen keinerlei weiteren Wartungsaufwand, bzw. irgendwelche weiteren im Getriebe nicht ohnehin schon vorgesehenen Zusatzbauteile. Eine Hilfsantriebsanordnung mit Zahnkupplungen ist somit besonders kostengünstig herstellbar, gewichtsgünstig und betriebssicher.

In weiterer Ausgestaltung der Erfindung ist eine doppelt schaltbare Kupplung vorgesehen, welche im wesentliche eine Grundstellung und zwei Schaltstellungen aufweist, wobei in der Grundstellung nur der Generator, in der ersten Schaltstellung noch zusätzlich die weiteren Hilfseinrichtungen des Gasturbinentriebswerks und in der zweiten Schaltstellung zusätzlich das Gasturbinentriebwerk selbst angetrieben wird. Eine einzelne Kupplung kann somit alle drei geforderten Antriebsvarianten sicherstellen. Eine solche Kupplungsvariante ist herstellungs- und kostengünstig.

In einer Weiterbildung der Erfindung ist eine zweifach schaltbare Zahnkupplung vorgesehen, bei der zwei gleichgroße, gleichverzahnte Zahnräder vorgesehen sind, wobei ein Zahnrad auf einer vom Freilauf direkt angetriebenen Welle im Getriebe angeordnet und das andere Zahnrad mit dem Rotor des Gasturbinentriebwerkes fest verbunden ist. Beide Zahnräder sind einander koaxial gegenüberliegend angeordnet. Konzentrisch zu den Zahnrädern ist ein ständig mit den weiteren Hilfseinrichtungen zu deren Antrieb verbundenes Hohlrad vorgesehen. Die angetriebene Welle ist zur Energieübertragung immer mit der Generatorwelle verbunden. Mittels einer sowohl ständig mit dem Zahnrad der Welle im Eingriff befindlichen als auch ggf. mit dem Hohlrad bzw. dem Zahnrad des Rotors im Eingriff befindlichen, axialen Verschiebemuffe werden die gewünschten, verschiedenen Schaltzustände der Kupplung erreicht. In vorteilhafter Weise werden keine zusätzlichen Verzahnungen benötigt, weshalb die Leistungsverluste des gesamten Getriebes außerordentlich gering ist. Ferner ist diese zweifach schaltbare Zahnkupplung im Betrieb problemlos, in der Wartung einfach, im Verschleißverhalten günstig und in der Herstellung preiswert.

In einer weiteren Ausgestaltung der Erfindung ist die angetriebene Generatorwelle als Antriebswelle der zweiten Kupplung ausgebildet. Die Energieübertragung verläuft somit von der Luftturbine stets direkt auf die Generatorwelle. Verluste durch nicht benötigte Zahnradpaarungen oder momentan unnötig sich drehende Wellen sind somit zuverlässig minimiert. In vorteilhafter Weise kann der Freilauf zum Antrieb des Getriebes durch die Luftturbine auch auf der Generatorwelle angeordnet sein, so daß im Antriebsfall des Getriebes durch das Gasturbinentriebwerk lediglich die Generatorwelle ohne das Getriebeteil bis zum Freilauf angetrieben wird. In dieser — dem normalen Betriebsfall des Flugzeugs entsprechenden Schaltungsvariante — können folglich keine Verluste durch unnötig betriebene Zahnradpaarungen entstehen. Die erfindungsgemäße Hilfsantriebsanordnung ist somit auch während des Flugs kraftstoffsparend und kostengünstig.

Es hat sich gezeigt, daß erfindungsgemäße Hilfsantriebsanordnungen besonders günstig bei Flugzeugen mit mindestens zwei Gasturbinentriebwerken sind. In diesem Fall ist jedes der Gasturbinentriebwerke mit einem erfindungsgemäßen Getriebe mit jeweils einer Luftturbine ausgerüstet, wogegen lediglich eine Hilfsgasturbine vorgesehen ist. Die Hilfsgasturbine ist derart ausgelegt, daß sie mit ihrem Verdichter den Antrieb einer Luftturbine und aller daran angeschlossenen Energieverbraucher übernehmen kann und ist über Druckluftleitungen mit den beiden Luftturbinen verbunden. Ferner sind noch Verbindungsleitungen zu den Gasturbinentriebwerksverdichtern vorgesehen, wodurch verdichtete Zapfluft von diesen Verdichtern auf die Luftturbinen geleitet werden kann. Es ist so während des Fluges des Flugzeugs möglich, ein stehendes Triebwerk durch ein anderes laufendes Triebwerk zu starten, indem Zapfluft von einem laufenden Triebwerk auf die Luftturbine des stehenden Triebwerks geleitet wird. Entsprechende Ventile sind vorgesehen.

Ferner können bei dieser Anordnung bestehend aus zwei Gasturbinentriebwerken und zwei Getrieben mit Zahnkupplungen sowie nur einer Hilfsgasturbine die Gasturbinentriebwerke am Boden gestartet werden, ohne daß die Bordversorgung durch zeitweises Stillsetzen von Hilfseinrichtungen unterbrochen wird. Dazu versorgt zunächst die Hilfsgasturbine das erste Getriebe mit Energie, wodurch die dort angebauten Hilfseinrichtungen von diesem Getriebe betrieben werden. Die Zahnkupplung ist entsprechend eingerückt. Im zweiten Getriebe, das zu diesem Zeitpunkt stillgesetzt ist, wird die dortige Zahnkupplung derart betätigt, daß eine Verbindung zum Rotor des zweiten Gasturbinentriebwerks hergestellt ist. Danach wird das zweite Gasturbinentriebwerk über das zweite Getriebe durch Zugabe von Verdichterluft der Hilfsgasturbine angelassen. Hat das zweite Gasturbinentriebwerk seinen Betrieb aufgenommen und betreibt die Hilfseinrichtungen des zweiten Getriebes, kann die Verdichterluftzufuhr zum ersten Getriebe unterbrochen werden und dieses somit stillgesetzt werden. Die Hilfsenergiezufuhr wird von den Hilfseinrichtungen des zweiten Getriebes übernommen. Es ist jetzt möglich, im ersten Getriebe die Zahnkupplung so einzurücken, daß das erste Gasturbinentriebwerk durch das erste Getriebe angelassen werden kann. Die Luftturbine des ersten Getriebes wird mit verdichteter Luft von der Hilfsgasturbine oder dem zweiten Gasturbinentriebwerk beaufschlagt und das erste Gasturbinentriebwerk wird folglich gestartet. Während des gesamten Anlaßvorgangs beider Gasturbinentriebwerke ist somit in vorteilhafter Weise eine ununterbrochene Hilfsenergieversorgung des Flugzeugs durch die an den Getrieben angebauten Hilfseinrichtungen gewährleistet, ohne daß Synchronisierungseinrichtungen an den Zahnkupplungen der Getriebe vorgesehen sein müssen.

Weitere Ausgestaltungen, Vorteile und Merkmale der Erfindung sind aus der nachfolgenden Beschreibung zu entnehmen, in der in der Zeichnung dargestellte Ausführungsbeispiele der Erfindung näher erläutert sind. Es zeigt :

Fig. 1 eine schematische Darstellung einer erfindungsgemäßen Hilfsantriebsanordnung,

Fig. 2 einen Axialschnitt durch eine erfindungsgemäße Getriebewellenanordnung mit einer zweifach schaltbaren Zahnkupplung zum Antrieb des Generators und des Gasturbinentriebwerks,

Fig. 3 eine schematische Darstellung eines Axialschnitts durch eine Zahnkupplung nach Fig. 2 mit den verschiedenen Schaltstellungen,

a) Grundstellung, Antrieb nur der Generatorwelle,

b) erste Schaltstellung, zusätzlicher Antrieb der Hilfseinrichtungen,

c) zweite Schaltstellung, zusätzlicher Antrieb des Rotors des Gasturbinentriebwerks.

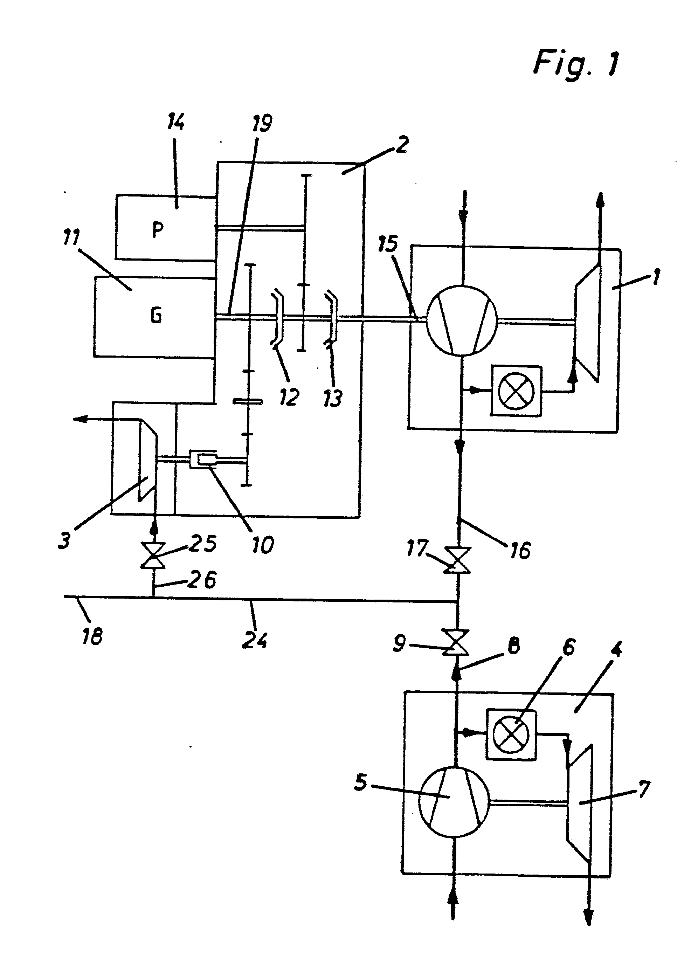

In Fig. 1 ist ein Gasturbinentriebwerk 1 mit einem Getriebe 2 verbunden. Das Getriebe 2 wird weiterhin von einer Luftturbine 3 angetrieben, die von einer Hilfsgasturbine 4 mit komprimierter Luft zum Antrieb versorgt wird. Die Hilfsgasturbine 4 besteht aus einem Verdichter 5, einer Brennkammer 6 und einer Turbine 7, wobei der Verdichter 5 der Hilfsgasturbine 4 derart ausgelegt ist, daß er sowohl die für den Betrieb der Turbine 7 benötigte Luftmenge als auch die zum Antrieb der Luftturbine 3 benötigte Luft gleichzeitig zur Verfügung stellen kann. Der Auslaß des Verdichters 5 ist an eine Leitung 8 angeschlossen, die über ein erstes Absperrventil 9 in eine Sammelleitung 24 mündet. Von der Sammelleitung 24 zweigt über ein zweites Absperrventil 25 die Zufuhrleitung 26 zur Luftturbine 3 ab. Innerhalb des Getriebes 2 wirkt die Luftturbine 3 auf einen Freilauf 10, der wiederum direkt einen an das Getriebe 2 angeflanschten Generator 11 antreibt. Mit dem Freilauf 10 ist im weiteren eine schaltbare Kupplung 12 drehstarr verbunden. Die Kupplung 12 treibt — in Energieflußrichtung von der Luftturbine 3 aus betrachtet — abtriebsseitig sowohl eine weitere Kupplung 13 als auch eine Hydraulikpumpe 14 an. Es können noch weitere Hilfseinrichtungen beispielsweise für das Flugzeug, die Hilfsgasturbine 4 oder das Gasturbinentriebwerk 1 parallel zu der Hydraulikpumpe 14 angetrieben werden. Die Abtriebsseite der Kupplung 13 ist mit dem Rotor 15 des Gasturbinentriebwerks 1 verbunden. Innerhalb des Getriebes 2 sind alle Kraftübertragen als Zahnradpaarungen ausgeführt, die zusätzlich noch die zum Antrieb der einzelnen Hilfseinrichtungen benötigten Übersetzungsverhältnisse realisieren. Ferner ist eine Verbindungsleitung 16 mit einem Ventil 17 von dem Verdichter des Gasturbinentriebwerks 1 zur Sammelleitung 24 und damit zur Luftturbine 3 vorgesehen. An die Sammelleitung 24 kann ferner eine Übergangsleitung 18 zu einem nicht gezeigten zweiten Gasturbinentriebwerk mit einem eigenen Getriebe angeschlossen werden. Es ist so die gegenseitige Kopplung der beiden Gasturbinentriebwerke über die jeweiligen Getriebe möglich.

Soll das in einem Flugzeug eingebaute Gasturbinentriebwerk 1 angelassen werden, so wird zunächst die Hilfsgasturbine 4 gestartet. Diese liefert über ihren Verdichter 5 durch die Leitung 8 am geöffneten ersten Absperrventil 9 vorbei, über die Sammelleitungen 24 und die Zufuhrleitung 26 durch das geöffnete zweite Absperrventil 25 komprimierte Luft an die Luftturbine 3. Die an dem Getriebe 2 befestigte Luftturbine 3 treibt mit ihrer Antriebswelle den im Getriebe 2 befindlichen Freilauf 10 an. Die von der Luftturbine 3 abgegebene Energie wird zunächst auf den Generator 11 geleitet, welcher elektrische Energie zu liefern beginnt. Die Kupplung 12 ist ausgerückt. In dieser Betriebsphase, wenn das Flugzeug sich am Boden in Bereitschaft oder in der Prüfphase der elektrischen Einrichtung befindet, wird somit in treibstoffkostensenkender Weise von der Hilfsgasturbine 4 nur der Generator 11 und dabei auch nur die zu diesem Antrieb unbedingt notwendigen Zahnradpaarungen des Getriebes 2 angetrieben.

Nach Beendigung dieses Bereitschaftsbetriebs sollen die restlichen Systeme des Flugzeugs und des Gasturbinentriebwerks vor dem Starten des Flugzeugs bzw. des Gasturbinentriebwerks 1 getestet werden. Dazu müssen sämtliche Hilfseinrichtungen von der Hilfsgasturbine 4 mit der notwendigen Energie versorgt werden. Die Kupplung 12 wird eingerückt, wogegen die Kupplung 13 noch ausgerückt bleibt. In diesem Moment wird die Hydraulikpumpe 14 und auch noch weitere nicht dargestellte Hilfseinrichtungen des Gasturbinentriebwerks 1 und/oder des Flugzeugs angetrieben. Eine weitgehende vollständige Prüfung aller Komponenten des Flugzeugs und des Gasturbinentriebwerks 1 kann erfolgen.

Zum Starten des Gasturbinentriebwerks 1 wird die Kupplung 13 eingerückt, so daß die Luftturbine 3 zusätzlich zum gesamten Getriebe 2 auch den Rotor 15 des Gasturbinentriebwerks 1 in Rotation versetzt. Nach dem Start des Gasturbinentriebwerks 1 wird die Drehzahl des Rotors 15 größer als die Drehzahl der Luftturbine 3, wodurch die Luftturbine 3 infolge des Freilaufs 10 vom Getriebe 2 bzw. vom Antrieb des Getriebes 2 abgekoppelt wird. Das Gasturbinentriebwerk 1 übernimmt die Energiezufuhr zum Getriebe 2 und im Endeffekt zu den Hilfseinrichtungen des Flugzeugs. Auch jetzt werden in vorteilhafter Weise nur die gerade benötigten Hilfseinrichtungen und Zahnradpaarungen im Getriebe 2 von dem Gasturbinentriebwerk 1 angetrieben. Die Hilfsgasturbine 4 kann abgeschaltet werden.

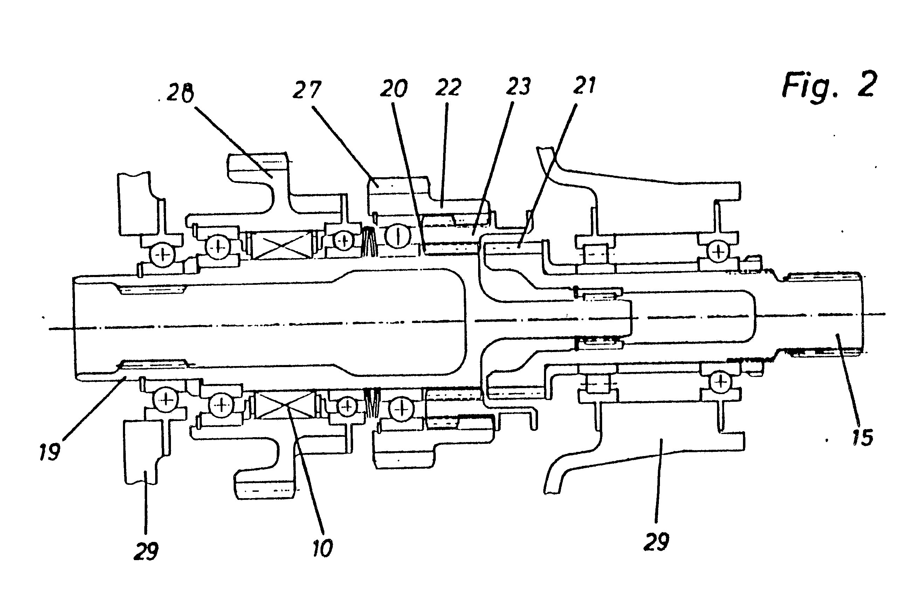

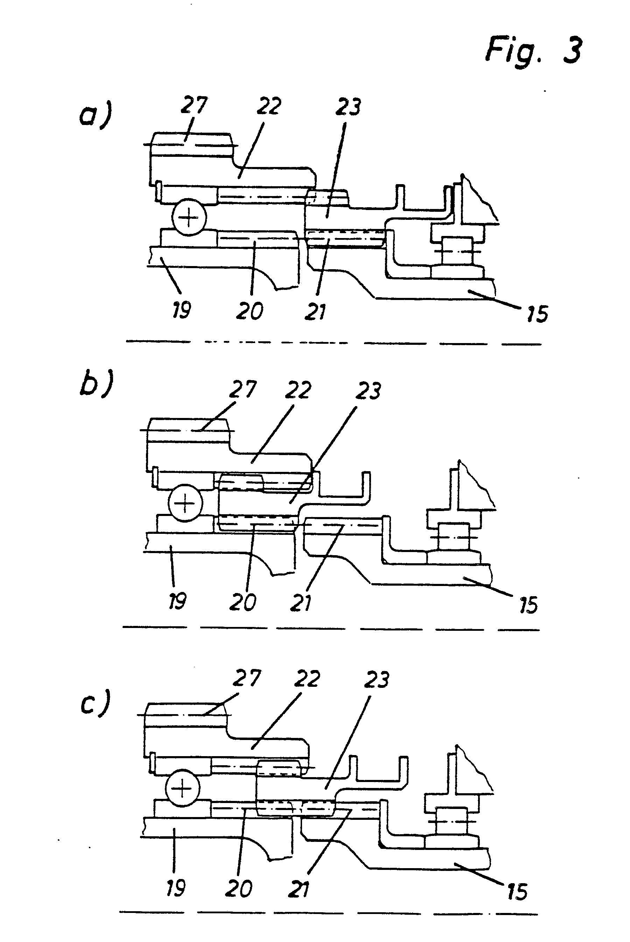

In den Fig. 2 und 3 ist ein bestimmtes Ausführungsbeispiel der Hilfsantriebsanordnung mit einem Getriebe 2 gezeigt, das eine Ausführung der Kupplungen 12 und 13 als eine einzige zweifachschaltbare Zahnkupplung und eine Anordnung des Freilaufs 10 auf einer Generatorwelle 19 des Generators 11 beinhaltet. Die Luftturbine 3 treibt somit über den Freilauf 10 direkt die Generatorwelle 19 und diese wiederum die zweifach schaltbare Zahnkupplung an. Je nach Schaltstellung der zweifach schaltbaren Zahnkupplung wird die Energie von der Generatorwelle auf die Hilfseinrichtungen und/oder das Gasturbinentriebwerk 1 verteilt. Bei umgekehrtem Energiefluß von dem Gasturbinentriebwerk 1 wird die Energie gleichermaßen auf die Generatorwelle 19 und die Hilfseinrichtungen verteilt.

In Fig. 2 ist ein Teil der in das Innere des Getriebes 2 hineinreichenden Generatorwelle 19 gezeigt. An dem einen stirnseitigen Ende der Generatorwelle 19 ist ein Zahnrad 20 vorgesehen. Koaxial gegenüberliegend zur Generatorwelle 19 befindet sich ein weiteres, dem ersten Zahnrad 20 in Größe und Verzahnung entsprechendes zweites Zahnrad 21, das mit einem Teil des Rotors 15 des Gasturbinentriebwerks 1 fest verbunden ist. Konzentrisch zu den beiden Zahnräder 20, 21 ist ein Hohlrad 22 angeordnet, wobei in dem radialen Zwischenraum zwischen den Zahnrädern 20, 21 und dem Hohlrad 22 eine Zahnmuffe 23 eingesetzt ist.

Die Zahnmuffe 23 weist eine Innenverzahnung, die der Verzahnung der Zahnräder 20 und 21 entspricht, und eine Außenverzahnung, die der Verzahnung des Hohlrades 22 entspricht, auf. Die Zahnmuffe 23 ist dabei in ihrer axialen Richtung verschieblich ausgebildet und kann je nach ihrer axialen Verschiebestellung entweder nur mit dem Zahnrad 21 oder mit dem Zahnrad 20 und dem Hohlrad 22 oder auch mit den Zahnrädern 20, 21 sowie dem Hohlrad 22 im Eingriff sein. In Fig. 2 ist die Zahnmuffe 23 in der mit dem Zahnrad 20 und dem Hohlrad 22 im Eingriff befindlichen Stellung gezeigt.

Das Hohlrad 22 ist drehbar auf der Generatorwelle 19 gelagert und mit einer zusätzlichen Außenverzahnung 27 versehen. Über diese Außenverzahnung 27 werden die Hilfseinrichtungen wie beispielsweise die Hydraulikpumpe 14 angetrieben. Ferner ist zum Antrieb der Generatorwelle 19 durch die Luftturbine 3 ein Zahnrad 28 über entsprechende Lager drehbar auf der Generatorwelle 19 gelagert. Zwischen dem Zahnrad 28 und der Generatorwelle 19 ist der Freilauf 10 angeordnet. Die Generatorwelle 19 ist über Radial- und Axiallager einerseits an dem Gehäuse 29 des Getriebes 2 und andererseits über ein Nadellager in dem Teil des Rotors 15 des Gasturbinentriebwerks 1 drehbar gelagert. Der Teil des Rotors 15 ist über entsprechende Radial- und Axiallagerungen am Gehäuse 29 des Getriebes 2 abgestützt. Für die erfindungsgemäße Anordnung können auch andere Lagerungen als die gezeigten und beschriebenen zweckmäßig sein. Es muß dabei allerdings sichergestellt sein, daß die erfindungsgemäße Funktion verwirklicht wird.

Im Antriebsfall durch die Luftturbine 3 wird das Zahnrad 28 von der Luftturbine 3 angetrieben und treibt über den Freilauf 10 die Generatorwelle 19 an. Die Generatorwelle 19 leitet die Energie je nach Schaltstellung der Zahnmuffe 23 an die Hilfseinrichtungen oder den Rotor 15 des Gasturbinentriebwerks 1 weiter. Treibt das Gasturbinentriebwerk das Getriebe 2 an, wird das Zahnrad 28 durch den Freilauf 10 von der Generatorwelle 19 getrennt, so daß in vorteilhafter Weise auch in diesem Betriebsfall im Flug des Flugzeugs nur die gerade zum Betrieb der Hilfseinrichtungen notwendigen Zahnradpaarungen angetrieben werden. Diese Leistungsverluste minimierende Bauweise wirkt sich treibstoffsparend und damit betriebskostensenkend aus.

In Fig. 3 sind die vier möglichen Betriebsstel-

lung der in Fig. 2 gezeigten, zweifach schaltbaren Zahnkupplung dargestellt. Fig. 3a zeigt die Grundstellung der Zahnkupplung und den ersten Betriebsfall des Getriebes 2. Die Zahnmuffe 23 ist axial ganz in Richtung des Rotors 15 des Gasturbinentriebwerks 1 verschoben, wodurch die Zahnmuffe 23 lediglich mit dem Zahnrad 21 in Verbindung steht. Insbesondere das Zahnrad 20 der Generatorwelle 19 kämmt nicht mit der Zahnmuffe 23 und kann daher keinerlei Energie auf die weiteren an das Getriebe 2 angeschlossenen Einrichtungen abgeben. Die Hilfsgasturbine 4 ist im Betrieb und liefert komprimierte Luft an die Luftturbine 3. Die Luftturbine 3 treibt den Freilauf 10 und die Generatorwelle 19 an und erzeugt so durch den Generator 11 elektrische Energie. Weitere Zahnräder oder sonstige Teile werden im Getriebe 2 nicht in Bewegung gesetzt. Der in Fig. 3a gezeigte erste Betriebsfall mit Grundstellung der zweifach schaltbaren Zahnkupplung kann dem Bereitschaftsbetrieb des Flugzeugs am Boden bzw. der Checkphase der elektrischen Einrichtungen des Flugzeugs, wie beispielsweise der Avionik, entsprechen.

In Fig. 3b ist die erste Schaltstellung der Zahnkupplung und der zweite Betriebsfall der erfindungsgemäßen Hilfsantriebsanordnung dargestellt. Die Zahnmuffe 23 ist gegenüber ihrer Stellung in Fig. 3a axial soweit verschoben, daß ihre Innenverzahnung mit dem Zahnrad 20 der Generatorwelle 19 und ihre Außenverzahnung mit dem Hohlrad 22 kämmt. Es besteht keine kraftschlüssige Verbindung zwischen der Zahnmuffe 23 und dem Zahnrad 21. Die Hilfsgasturbine 4 liefert wiederum komprimierte Luft an die Luftturbine 3, welche über den Freilauf 10 die Generatorwelle 19 antreibt. Die Energie der Luftturbine 3 wird somit sowohl an den Generator 11 als auch über die Zahnmuffe 23, das Hohlrad 22 und die Außenverzahnung 27 an die weiteren an das Getriebe 2 angeschlossenen Hilfseinrichtungen, wie beispielsweise die Hydraulikpumpe 14, weitergeleitet.

In Fig. 3c ist die zweite Schaltstellung der Zahnkupplung und der dritte sowie vierte Betriebsfall der erfindungsgemäßen Hilfsantriebsanordnung dargestellt. Die Zahnmuffe 23 befindet sich in einer axialen Mittelstellung und verbindet kraftschlüssig über ihre Innen- und Außenverzahnung die Zahnräder 20 und 21 sowie das Hohlrad 22. Zum Anlassen des Gasturbinentriebwerks 1 (dritter Betriebsfall) liefert die Hilfsgasturbine 4 komprimierte Luft an die Luftturbine 3, welche über den Freilauf 10 die Generatorwelle 19 antreibt. Durch die axiale Verschiebestellung der Zahnmuffe 23 wird die Energie jetzt auch auf den Rotor 15 des Gasturbinentriebwerks 1 geleitet. Nach Abschluß des Anlaßvorgangs des Gasturbinentriebwerks 1 kehrt sich der Energiefluß um, denn der Rotor 15 des Gasturbinentriebwerks 1 beginnt sich schneller zu drehen als das von der Luftturbine 3 angetriebene Zahnrad 28 auf der Generatorwelle 19. Dies ist der vierte Betriebsfall der erfindungsgemäßen Hilfsantriebsanordnung, bei der das Gasturbinentriebwerk 1 das Getriebe 2 antreibt und der Freilauf 10 das Zahnrad 28 und damit die Luftturbine 3 vom Antrieb abkoppelt. Die Hilfsgasturbine 4 kann außer Betrieb gesetzt werden. Zum Antrieb aller Hilfseinrichtungen werden nur die gerade tatsächlich benötigten Zahnradpaarungen im Getriebe 2 angetrieben. Der Zahnradstrang von der Luftturbine 3 zur Generatorwelle 19 steht vollständig still. Die anfallenden Getriebeverluste werden somit in vorteilhafter Weise auch in diesem Betriebsszustand minimal gehalten, wodurch die erfindungsgemäße Hilfsantriebsanordnung auch für den Flugbetrieb treibstoffsparend wirkt.

Alle Schaltvorgänge der Zahnmuffe 23, d. h. die axiale Verschiebung derselben, müssen während eines Stillstands des Getriebes 2 durchgeführt werden. Dies bedeutet, daß momentan die Zufuhr der komprimierten Luft zur Luftturbine 3 für den Schaltvorgang unterbrochen werden muß. Zweckmäßig können an den Zahnrädern der Zahnkupplungen 12, 13 auch Synchronringe angebracht werden, so daß in vorteilhafter Weise auch ein Schaltvorgang während des lastfreien Laufs des Getriebes 2 durchführbar ist.

Der Verdichter 5 der Hilfsgasturbine 4 kann vorteilhaft einstufig und einflutig als Radialverdichter ausgebildet sein. Für andere Anwendungsfälle ist es jedoch auch zweckmäßig, die Hilfsgasturbine mit zwei voneinander getrennten Verdichterfluten bzw. Laufrädern auszurüsten, die beide gleichermaßen von der Turbine 7 angetrieben werden. Die eine Verdichterstufe des Verdichters 5 versorgt die Turbine 7 mit Verbrennungsluft, während die andere Flut des Verdichters 5 die zum Antrieb der Luftturbine 3 notwendige komprimierte Luft zur Verfügung stellt. Für besonders große Massenströme können auch zweckmäßig mehrstufige Axialverdichter verwendet werden, die dann je nach Bedarf einflutig oder mehrflutig ausgelegt sind.

**Patentansprüche**

1. Hilfsantriebsanordnung mit Getriebe (2) für ein Gasturbinentriebwerk (1), bei der eine Hilfsgasturbine (4) komprimierte Verdichterluft zum Antrieb des Getriebes (2) durch eine über einen Freilauf (10) gekoppelte Luftturbine (3) liefert, wobei das Getriebe (2) Hilfseinrichtungen für das Gasturbinentriebwerk (1) und/oder ein Flugzeug, wie einen mit einer Generatorwelle (19) versehenen Generator (11) und eine Hydraulikpumpe (14), antreibt, und bei der das Getriebe (2) über eine schaltbare Kupplung (13) mit einem Abtrieb für einen Rotor (15) des Gasturbinentriebwerks (1) versehen ist, dadurch gekennzeichnet, daß die Hilfsgasturbine (4) zum Antrieb des Getriebes (2) ihre Energie nur über komprimierte Verdichterluft an die Luftturbine (3) bzw. das Getriebe (2) überträgt, daß im Getriebe (2) die Energie von der Luftturbine (3) zunächst auf die Generatorwelle (15) übertragbar ist und daß die Energie von einer im Getriebe (2) — in Energieflußrichtung von der Luftturbine (3) zum Generator (11) betrachtet —

nach dem Freilauf (10) angeordneten Welle über eine weitere schaltbare Kupplung (12) auf die restlichen Hilfseinrichtungen übertragbar ist, wobei die erste, für den Antrieb des Rotors vorgesehene Kupplung (13) — in Energieflußrichtung von der Luftturbine (3) zu den Hilfseinrichtungen betrachtet — nach der zweiten, für die Verbindung der Welle mit den Hilfseinrichtungen vorgesehenen Kupplung (12) mit dieser verbunden ist.

2. Hilfsantriebsanordnung nach Anspruch 1, dadurch gekennzeichnet, daß die Kupplungen (12, 13) als schaltbare Zahnkupplungen ausgebildet sind.

3. Hilfsantriebsanordnung nach Anspruch 1 oder 2, dadurch gekennzeichnet, daß beide Kupplungen (12, 13) als eine einzige, zweifach schaltbare Kupplung ausgebildet sind, wobei in einer Grundstellung der zweifach schaltbaren Kupplung die Luftturbine (3) nur mit der Generatorwelle (19) verbunden ist, in einer ersten Schaltstellung die Luftturbine (3) mit der Generatorwelle (19) und den Hilfseinrichtungen verbunden ist und in einer zweiten Schaltstellung die Luftturbine (3) mit der Generatorwelle (19), den Hilfseinrichtungen und den Abtrieb für den Rotor (15) des Gasturbinentriebwerks (1) verbunden ist.

4. Hilfsantriebsanordnung nach Anspruch 2 und 3, dadurch gekennzeichnet, daß eine die zweifach schaltbare Kupplung antreibende Welle koaxial zum Abtrieb für den Rotor (15) des Gasturbinentriebwerks (1) angeordnet ist, daß die Welle und der Abtrieb jeweils ein gleichverzahntes, gleichgroßes und einander gegenüberstehendes Zahnrad (20, 21) aufweisen, daß ein in etwa konzentrisch um beide Zahnräder angeordnetes, innen verzahntes Hohlrad (22) mit den Hilfseinrichtungen verbunden ist und daß eine außen entsprechend dem Hohlrad (22) verzahnte, innen entsprechend den Zahnrädern (20, 21) verzahnte und stets mit den wellenseitigen Zahnrad (20) im Eingriff befindliche, axial verschiebliche Zahnmuffe (23) radial zwischen dem Hohlrad (22) und den Zahnrädern (20, 21) angeordnet ist, wobei je nach axialer Verschiebung der Zahnmuffe (23) die gewünschte Schaltstellung zur Energieübertragung der zweifach schaltbaren Kupplung erreichbar ist.

5. Hilfsantriebsanordnung nach einem der Ansprüche 1 bis 4, dadurch gekennzeichnet, daß die Generatorwelle (19) — in Energieflußrichtung von der Luftturbine (3) zum Generator (11) betrachtet — die zweite Kupplung (12) antreibend ausgebildet ist.

6. Hilfsantriebsanordnung nach Anspruch 5, dadurch gekennzeichnet, daß der Freilauf (10) auf der Generatorwelle (19) angeordnet ist und die Generatorwelle (19) — in Energieflußrichtung von der Luftturbine (3) zum Generator (11) betrachtet — unmittelbar antreibt.

7. Hilfsantriebsanordnung nach einem der Ansprüche 1 bis 6, dadurch gekennzeichnet, daß ein Verdichter (5) der Hilfsgasturbine (4) als einziger Verdichter der Hilfsgasturbine (4) vorgesehen ist und sowohl einstufig als auch einflutig ausgebildet ist.

## Claims

1. An auxiliary drive system comprising a transmission (2) for a gas turbine engine (1) in which an auxiliary gas turbine (4) delivers compressed air for driving the transmission (2) through an air turbine (3) coupled via a by-pass opening (10), the transmission system (2) driving auxiliary devices for the gas turbine engine (1) and/or an aircraft, such as a generator (11) comprising a shaft (19) and a hydraulic pump (14), and the transmission (2) being provided via a switchable coupling (13) with a power take-off for a rotor (15) of the gas turbine engine (1), characterised in that the auxiliary gas turbine (4) for driving the transmission (2) transmits energy only via compressed air to the air turbine (3) or the transmission (2), in the transmission (2) the energy from the air turbine (3) is first transmitted to the generator shaft (15), and the energy is transmitted to the remaining auxiliary devices via an auxiliary switchable coupling (12) by a shaft disposed in the transmission (2) behind the by-pass opening, seen in the direction of energy flow from the air turbine (3) to the generator (11), and the first coupling (13), which is provided for driving the rotor, is disposed (considered in the direction of energy flow from the air turbine (3) to the auxiliary devices) behind the second coupling (12) for connecting the shaft to the auxiliary devices, and is connected thereto.

2. An auxiliary drive system according to claim 1, characterised in that the couplings (12, 13) are switchable toothed couplings.

3. An auxiliary drive system according to claim 1 or 2, characterised in that the two couplings (12, 13) are constructed as a single, twice-switchable coupling, and when the twice-switchable coupling is in a basic position the air turbine (3) is connected only to the generator shaft (19), whereas in a first switch position the air turbine (3) is connected to the generator shaft (19) and the auxiliary devices and in a second switch position the air turbine (3) is connected to the generator shaft (19), the auxiliary devices and the power take-off for the rotor (15) of the gas turbine engine (1).

4. An auxiliary drive system according to claims 2 and 3, characterised in that a shaft driving the twice-switchable coupling is disposed coaxially with the power take-off for the rotor (15) of the gas turbine engine (1), the shaft and the power take-off each comprise a wheel (20, 21) having the same number of teeth, the same size and opposite the other wheel, an internally-toothed hollow wheel (22) disposed substantially concentrically around the other two wheels being connected to the auxiliary device, and an axially-movable toothed sleeve (23) having external teeth corresponding to the hollow wheel (22) and internally-toothed corresponding to the wheels (20, 21) and always in engagement with the wheel (20) on the shaft side is disposed radially between the hollow wheel (22) and the wheels (20, 21), and the desired switching position for transmitting energy via the twice-switchable coupling is obtainable by axially moving the toothed sleeve (23).

5. An auxiliary drive system according to any of claims 1 to 4, characterised in that the generator shaft (19), seen in the direction of energy flow from the air turbine (3) to the generator (11), is constructed so as to drive the second coupling (12).

6. An auxiliary drive system according to claim 5, characterised in that the by-pass opening (10) is disposed on the generator shaft (19) and directly drives the generator shaft (19), seen in the direction of energy flow from the air turbine (3) to the generator (11).

7. An auxiliary drive system according to any of claims 1 to 6, characterised in that a compressor (5) of the auxiliary gas turbine (4) is constructed as a single compressor of the auxiliary gas turbine (4) and has one stage and one impeller.

## Revendications

1. Installation d'entraînement auxiliaire avec boîte de vitesses pour une turbine à gaz (1) sur laquelle une turbine à gaz auxiliaire (4) délivre de l'air comprimé pour entraîner une boîte de vitesses (2) à l'aide d'une turbine à air (3), la boîte de vitesses (2) entraînant des dispositifs auxiliaires pour la turbine à gaz (1) et/ou un avion, tels qu'un générateur (11) comportant un arbre (19) et une pompe hydraulique (14), et sur lequel la boîte de vitesses (2) est munie d'un arbre de sortie par un accouplement débrayable (13) pour un rotor (15) de la turbine à gaz (1), caractérisée en ce que la turbine à gaz auxiliaire (4) pour l'entraînement de la boîte de vitesses (2) transmet son énergie à la turbine à air (3) et à la boîte de vitesses (2) seulement par l'air comprimé, en ce que dans la boîte de vitesses (2), l'énergie de la turbine à air (3) peut se transmettre en premier lieu à l'arbre du générateur (19) et en ce que l'énergie d'un arbre placé dans la boîte de vitesses (2) après la roue libre (10) — considéré dans le sens du flux d'énergie allant de la turbine à air (3) vers le générateur (11) — par un autre accouplement débrayable (12) sur les autres dispositifs restants, où — considéré dans le sens du flux d'énergie allant de la turbine à air (3) vers les dispositifs auxiliaires — le second accouplement (12) prévu pour l'entraînement du rotor (15) est relié à celui-ci après le premier accouplement (13) pour la liaison de l'arbre aux dispositifs auxiliaires.

2. Installation d'entraînement auxiliaire selon la revendication 1, caractérisée en ce que les accouplements (12) et (13) sont sous forme d'accouplements dentés embrayables.

3. Installation d'entraînement auxiliaire selon la revendication 1 ou 2, caractérisée en ce que les deux accouplements (12) et (13) sont sous forme d'un accouplement unique à double embrayage, où dans une position de base de l'accouplement à double embrayage, la turbine à air (3) est seulement reliée à l'arbre du générateur (19), dans une première position d'embrayage, elle est reliée à l'arbre du générateur (19) et aux dispositifs auxiliaires, et dans une seconde position d'embrayage, elle est reliée à l'arbre du générateur (19), aux dispositifs auxiliaires et à l'arbre de sortie pour le rotor (15) de la turbine à gaz (1).

4. Installation d'entraînement auxiliaire selon la revendication 2 ou 3, caractérisée en ce qu'un arbre entraînant un accouplement à double embrayage coaxialement à l'arbre de sortie pour le rotor (15) de la turbine à gaz (1) est mis en place, en ce que l'arbre et l'arbre de sortie comportent chacun un pignon (20, 21) se faisant face de même denture et de même dimension, en ce qu'une couronne à denture intérieure est reliée aux dispositifs auxiliaires et placée de façon pratiquement concentrique aux deux pignons (20, 21), et en ce qu'est mis en place un manchon denté (23) radialement entre les pignons (20 et 21) et la couronne dentée (22), ce manchon ayant une denture correspondant extérieurement aux pignons (20, 21) et se trouvant toujours en prise avec le pignon (20) côté arbre et pouvant se déplacer axialement, où après chaque déplacement axial de ce manchon (23), on peut obtenir la position d'embrayage désirée pour la transmission d'énergie à l'accouplement à double embrayage.

5. Installation d'entraînement auxiliaire selon l'une des revendications 1 à 4, caractérisée en ce que l'arbre du générateur (19) — considéré dans le sens du flux d'énergie s'écoulant de la turbine à air (3) au générateur (11) — est formé pour entraîner le second accouplement (12).

6. Installation d'entraînement auxiliaire selon la revendication 5, caractérisée en ce que la roue libre (10) est placée sur l'arbre du générateur, et ce dernier — considéré dans le sens du flux d'énergie s'écoulant de la turbine à air (3) au générateur (11) — est entraîné directement.

7. Installation d'entraînement auxiliaire selon l'une des revendications 1 à 6, caractérisée en ce qu'un compresseur (5) de la turbine à gaz auxiliaire (4) est conçu comme un compresseur unique de cette turbine ou est aussi bien formé comme une turbine à simple flux.

*Fig. 1*

Fig. 2

**Fig. 3**

a)

b)

c)